# EUROPÄISCHE PATENTSCHRIFT

(11) **EP 4 237 302 B1**
(45) Veröffentlichungstag und Bekanntmachung des Hinweises auf die Patenterteilung: **07.08.2024**
(21) Anmeldenummer: 21777204.5
(22) Anmeldetag: 06.09.2021
(51) Int. Cl.: B60W 30/18, B60W 60/00

(54) **VERFAHREN ZUR STEUERUNG EINES AUTOMATISIERT FAHRENDEN FAHRZEUGES**
METHOD FOR CONTROLLING A SELF-DRIVING VEHICLE
PROCÉDÉ DE COMMANDE D'UN VÉHICULE AUTONOME

(30) Priorität: 02.11.2020 DE 102020006696
(43) Veröffentlichungstag der Anmeldung: 06.09.2023
(73) Patentinhaber: Mercedes-Benz Group AG, 70372 Stuttgart (DE)
(72) Erfinder: DÖRR, Christoph, 70176 Stuttgart (DE); SALZMANN, Falk, 71263 Weil der Stadt (DE); SELLHUSEN, Stefan, 71229 Leonberg (DE); WERNER, Roland, 71069 Sindelfingen (DE)
(74) Vertreter: Novagraaf Group
(86) Internationale Anmeldenummer: PCT/EP2021/074490
(87) Internationale Veröffentlichungsnummer: WO 2022/089817

(56) Entgegenhaltungen:
- DE-A1- 102015 219 469
- SE-A1- 1 950 882
- US-A1- 2017 249 836
- RALF REGELE ED - ANONYMOUS: "Using Ontology-Based Traffic Models for More Efficient Decision Making of Autonomous Vehicles", AUTONOMIC AND AUTONOMOUS SYSTEMS, 2008. ICAS 2008. FOURTH INTERNATIONAL CONFERENCE ON, IEEE, PISCATAWAY, NJ, USA, 16 March 2008 (2008-03-16), pages 94 - 99, XP031242929, ISBN: 978-0-7695-3093-2

## Beschreibung

Die Erfindung betrifft ein Verfahren zur Steuerung eines automatisiert fahrenden Fahrzeuges gemäß dem Oberbegriff des Patentanspruchs 1.

Aus der US 2020 030 763 A1 ist ein Verfahren zur Steuerung eines automatisiert fahrenden Fahrzeugs beim Einfahren in eine Kreuzung gleichrangiger Straßen bekannt. Bei einer derartigen Kreuzung können Verkehrssituationen entstehen, in denen weitere Fahrzeuge im Wesentlichen gleichzeitig mit dem automatisiert fahrenden Fahrzeug die Kreuzung erreichen. In einer solchen Situation sind alle Fahrzeuge bezüglich der Kreuzungsdurchfahrt gleichberechtigt. Wenn das automatisiert fahrende Fahrzeug eine derartige Situation erkennt, ist vorgesehen, dass es den weiteren Fahrzeugen zunächst Vorfahrt gewährt und nach Ablauf einer vorgebbaren Wartezeit losfährt, sofern keines der weiteren Fahrzeuge vor ihm losgefahren ist.

Die DE 10 2019 105 739 A1 beschreibt ein Verfahren zum zumindest teilautomatisierten Führen eines Kraftfahrzeuges. Das Verfahren sieht vor, dass Hineintaststeuersignale zum Steuern einer Quer- und/oder Längsführung des Kraftfahrzeuges erzeugt und ausgegeben werden, um das Kraftfahrzeug zumindest teilautomatisiert derart zu führen, dass sich das Kraftfahrzeug in einen Straßenknotenpunkt hineintastet. Es werden Umgebungssignale empfangen, welche eine Umgebung des Kraftfahrzeuges während des Hineintastens in den Straßenknotenpunkt repräsentieren. Basierend auf den Umgebungssignalen wird bestimmt, dass sich das Kraftfahrzeug weiter in den Straßenknotenpunkt hineintasten darf, anhalten und/oder zurücksetzen muss. Basierend auf dem Bestimmen, um das Kraftfahrzeug entsprechend dem Bestimmen zumindest teilautomatisiert derart zu führen, dass sich das Kraftfahrzeug weiter in den Straßenknotenpunkt hineintastet, anhält oder zurücksetzt, werden Steuersignale zum Steuern der Quer- und/oder Längsführung erzeugt und ausgegeben. Zudem sind eine Vorrichtung, ein Kraftfahrzeug, ein Computerprogramm und ein maschinenlesbares Speichermedium beschrieben.

Darüber hinaus ist aus der EP 2 911 926 B1 ein Verfahren zur Koordinierung des Betriebes von vollautomatisiert fahrenden Kraftfahrzeugen bekannt. Dabei ist vorgesehen, dass eine durch mindestens einen Fahrereingriff beschriebene Trajektorie für jedes Kraftfahrzeug aus Egoinformationen, die den Zustand des Kraftfahrzeuges einschließlich einer Zielposition beschreiben, und Umgebungsinformationen, die die Umgebung des Kraftfahrzeuges beschreiben, durch ein Fahrzeugsystem des Kraftfahrzeuges ermittelt werden. Zudem wird ermittelt, ob mindestens eine eine notwendige Koordination anzeigende Koordinationsbedingung durch das Fahrzeugsystem des Kraftfahrzeuges vorliegt. Falls die Koordinationsbedingung oder mindestens eine der Koordinationsbedingungen vorliegt, werden Trajektoriendaten, die die Trajektorie beschreiben, über eine Kommunikationsverbindung durch eine fahrzeugeigene Kommunikationseinrichtung jedes Kraftfahrzeuges ausgetauscht. Die Trajektoriendaten der Kraftfahrzeuge werden auf Konflikte überprüft, die aufgrund einer räumlichen und zeitlichen Überlappung von Trajektorien von mindestens zwei der Kraftfahrzeuge und/oder Nichterreichen der Zielposition mindestens eines der Kraftfahrzeuge vorliegen. Falls ein Konflikt vorliegt, wird die Trajektorie mindestens eines an dem Konflikt beteiligten Kraftfahrzeuges aufgrund wenigstens einer Arbitrierungseinrichtung ausgewertet, angepasst und die jeweiligen angepassten Trajektorien werden über die jeweilige Kommunikationseinrichtung an das jeweilige Kraftfahrzeug übertragen. Anschließend werden die von der jeweiligen Trajektorie beschriebenen Fahrereingriffe durch das Kraftfahrzeug ausgeführt, wobei durch das Kraftfahrzeug, dessen Trajektorie angepasst wurde, die durch die jeweilige angepasste Trajektorie beschriebenen Fahrereingriffe ausgeführt werden.

Aus der SE 1 950 882 A1 ist ein Verfahren zur Steuerung eines autonomen Fahrzeugs beim Einfahren in eine Kreuzung bekannt, das geeignet ist, eine Blockadesituation zu lösen, die allein durch eine Rechts-vor-Links-Vorfahrtsregelung nicht gelöst werden kann. Dazu ist vorgesehen, dass das Fahrzeug bei Detektion eines zukünftigen Kollisionsrisikos in der Kreuzung eine Stoppposition an der Kreuzung bestimmt, an der es anhält und wartet bis das Kollisionsrisiko nicht mehr besteht. Die Stoppposition wird dabei anhand eines dynamischen Parameters, insbesondere anhand einer Zufallszahl bestimmt.

Aus der DE 10 2015 219 469 A1 ist ein Verfahren zur Verkehrsregelung an einer Kreuzung bekannt, mit dem insbesondere an einer Kreuzung mit gleichberechtigten Straßen Blockadesituationen vermieden werden können. Dabei ist vorgesehen, dass Fahrzeuge bei einer Annäherung an die Kreuzung Regelkarten miteinander austauschen, wobei die Regelkarten Verkehrsregeln enthalten, die aus der Sicht des jeweiligen Fahrzeugs an der Kreuzung gelten. Die Fahrzeuge stimmen sich dann anhand der Regelkarten und ggf. unter Einbeziehung eines Servers darüber ab, welches der Fahrzeuge als nächstes die Kreuzung durchfahren soll.

Aus der US 2017/249 836 A1 ist ein Verfahren zur Steuerung eines automatisierten Fahrzeugs an einer Kreuzung bekannt. Dabei ist vorgesehen, dass in einer Situation, in der das Fahrzeug und ein anderes gleichberechtigtes Fahrzeug gleichzeitig an der Kreuzung angehalten haben, eine zufällige Wartezeit vorgegeben wird, die das Fahrzeug warten muss, bevor es versucht in die Kreuzung einzufahren.

Der Erfindung liegt die Aufgabe zugrunde, ein Verfahren zur Steuerung eines automatisiert fahrenden Fahrzeuges bei einem Einfahren in einen Kreuzungsbereich anzugeben.

Die Aufgabe wird erfindungsgemäß durch ein Verfahren gelöst, welches die in Anspruch 1 angegebenen Merkmale aufweist.

Vorteilhafte Ausgestaltungen der Erfindung sind Gegenstand der Unteransprüche.

Bei dem erfindungsgemäßen Verfahren zur Steuerung eines automatisiert fahrenden Fahrzeuges bei einem Einfahren in eine Kreuzung gleichrangiger Straßen ist vorgesehen, dass das Fahrzeug beim Erkennen von gleichberechtigten weiteren Fahrzeugen an der Kreuzung den weiteren Fahrzeugen zumindest für eine vorgebbare Wartezeit Vorfahrt gewährt, gemäß einer vorgegebenen Arbitrierungsregel bestimmt, ob es gegenüber den weiteren Fahrzeugen einen Vorrang zum Passieren der Kreuzung haben soll und nach Ablauf der Wartezeit ein Kreuzungsdurchfahrtmanöver zum Durchfahren der Kreuzung startet, falls zuvor bestimmt wurde, dass das Fahrzeug den Vorrang zum Passieren der Kreuzung haben soll, und falls in der Zwischenzeit, also während der Wartezeit, keines der weiteren Fahrzeuge losgefahren ist.

Das erfindungsgemäße Verfahren sieht also vor, dass das Fahrzeug an einer Kreuzung, die auch gleichberechtigte weitere Fahrzeuge passieren wollen, bestimmt, ob es gegenüber diesen weiteren Fahrzeugen Vorrang haben soll. Wenn das der Fall ist, startet es mit der Kreuzungsdurchfahrt, allerdings nicht sofort, sondern erst nach der vorgegebenen Wartezeit, sofern innerhalb dieser Wartezeit keines der weiteren Fahrzeuge losgefahren ist.

Durch Anwendung des Verfahrens ist es möglich, eine Verkehrssituation mit ungeklärter Vorfahrt, insbesondere an einer Kreuzung gleichrangiger Straßen, im automatisierten Fahrbetrieb des Fahrzeuges aufzulösen.

Um eine solche Verkehrssituation aufzulösen, ist im Wesentlichen keine Kommunikation zwischen den beteiligten Fahrzeugen erforderlich. Dadurch, dass das automatisiert fahrende Fahrzeug den gleichberechtigten weiteren Fahrzeugen zunächst für die Dauer der Wartezeit Vorfahrt gewährt, deren Verhalten während dieser Zeit beobachtet und nach der Wartezeit in Abhängigkeit des beobachteten Verhaltens und in Abhängigkeit einer gemäß der Arbitrierungsregel vorgenommenen Priorisierung entscheidet, ob es losfahren soll, , ist eine Auflösung einer solchen Verkehrssituationen sowohl mit automatisiert als auch mit manuell betriebenen weiteren Fahrzeugen möglich ist.

Eine vorteilhafte Ausgestaltung des Verfahrens sieht vor, dass das Fahrzeug sich beim Starten des Kreuzungsdurchfahrtmanöver langsam in die Kreuzung hineintastet. Vorteilhafterweise wird das gestartete Kreuzungsdurchfahrtmanöver solange fortsetzt, solange die weiteren Fahrzeuge weiterhin warten, sich also gegenseitig Vorfahrt gewähren. Wenn auch nur eines der weiteren Fahrzeuge nicht mehr wartet, also losfährt, wird das Kreuzungsdurchfahrtmanöver vorteilhafterweise unterbrochen und das Fahrzeug hält an. Das Kreuzungsdurchfahrtmanöver wird vorteilhafterweise nach einer weiteren Wartezeit ab der Unterbrechung erneut gestartet, wenn die weiteren Fahrzeuge inzwischen wieder alle warten und sich somit wieder gegenseitig Vorfahrt gewähren.

Dadurch, dass das Fahrzeug bei der Durchführung des Kreuzungsdurchfahrtmanövers das Verhalten der weiteren Fahrzeuge kontinuierlich beobachtet, also beobachtet, ob die weiteren Fahrzeuge weiterhin stehen oder losfahren, und dadurch dass das Fahrzeug in Abhängigkeit des beobachteten Verhaltens das Kreuzungsdurchfahrtmanöver und mithin die Hineintastbewegung unterbricht, ist es unerheblich, ob die weiteren Fahrzeuge automatisiert oder manuell betrieben werden. Es bedarf somit keiner Kommunikationseinrichtung in dem Fahrzeug und in den weiteren Fahrzeugen um sich hinsichtlich der Vorfahrtgewährung aufeinander abzustimmen. Die Kreuzungsdurchfahrten der Fahrzeuge werden anhand der Beobachtung der Reaktion der weiteren Fahrzeuge auf ein Losfahren des Fahrzeugs und anhand der Reaktion des Fahrzeugs auf ein beobachtetes Losfahren arbitriert.

Eine Ausführung des Verfahrens sieht vor, dass die Wartezeit und/oder die weitere Wartezeit zufällig oder auch pseudozufällig bestimmt werden bzw. wird. Hierzu wird ein Zeitzähler gestartet, wenn sich das Fahrzeug an einer Haltlinie befindet. Dabei ist die jeweilige Wartezeit derart gewählt, dass eine Reaktion der weiteren Fahrzeuge, insbesondere wenn diese manuell betrieben werden, möglich ist und welche mittels der fahrzeugseitigen Sensoren detektiert werden können. Das heißt, die jeweilige Wartezeit wird so gewählt, dass den weiteren Fahrzeugen ausreichend Zeit zur Verfügung steht, eine mittels Sensoren erfassbare Reaktion auszuführen. Die Wartezeit und die weitere Wartezeit können insbesondere auch gleich sein.

In einer Weiterbildung des Verfahrens sieht die Arbitrierungsregel vor, dass der Vorrang zum Passieren der Kreuzung anhand von Fahrzeugkennzeichen des Fahrzeuges und der weiteren Fahrzeuge bestimmt wird. Vorteilhafterweise basiert die Arbitrierungsregel auf einer herstllerübergreifend getroffenen Vereinbarung, so dass alle Fahrzeuge die gleiche Arbitrierungsregel anwenden.

Die Arbitrierungsregel sieht insbesondere vor, dass mittels einer Hashfunktion aus den Zeichen der Fahrzeugkennzeichen jeweils ein Hashwert ermittelt wird und der Vorrang entsprechend einer Sortierreihenfolge der Hashwerte bestimmt wird.

In einer möglichen Weiterbildung ist auf einem Fahrzeugkennzeichen befindlichen Ziffern und/oder Buchstaben jeweils ein Wert zugeordnet, wobei eine Summe der Werte je Fahrzeugkennzeichen ermittelt wird und den Fahrzeugen wird in einer Reihenfolge von der kleinsten Summe zu der größten Summe nacheinander Vorrang zum Passieren der Kreuzung zugeordnet. Somit kann der Konflikt in Bezug darauf, wer die Kreuzung zuerst passieren kann, gelöst werden.

In einer weiteren Ausführungsform wird ein Verhalten der weiteren Fahrzeuge an der Kreuzung anhand erfasster Signale einer Umgebungssensorik des Fahrzeuges ermittelt. Insbesondere wird das Verhalten der weiteren Fahrzeuge anhand erfasster Bilddaten zumindest einer Fahrzeugkamera als Bestandteil der Umgebungssensorik ermittelt. So kann beispielsweise ein Losfahren eines der weiteren Fahrzeuge detektiert werden, wobei dies ebenfalls anhand einer ermittelten Abstandsänderung zwischen dem Fahrzeug und den weiteren Fahrzeugen erfasst werden kann.

In einer Ausbildung des Verfahrens werden die Fahrzeugkennzeichen der weiteren Fahrzeuge anhand erfasster Bildsignale einer Fahrzeugkamera des Fahrzeuges ermittelt, wobei das Fahrzeugkennzeichen des Fahrzeuges in einer fahrzeugseitigen Speichereinheit hinterlegt ist. Somit ist es vergleichsweise einfach die Hashfunktion zur Ermittlung eines jeweiligen Hashwertes zur Festlegung, welches Fahrzeug die Kreuzung zuerst passieren kann, durchzuführen.

Wenn das Fahrzeugkennzeichen eines Fahrzeugs nicht erkannt werden kann oder nicht eindeutig erkannt werden kann, wird diesem Fahrzeug vorteilhafterweise ein Fahrzeugkennzeichen zugeordnet, das zufällig generiert wird, insbesondere zufällig aus einer Liste vorgegebener Kennzeichen ausgewählt wird.

Ausführungsbeispiele der Erfindung werden im Folgenden anhand von Zeichnungen näher erläutert.

Dabei zeigen:
- Fig. 1: schematisch eine Kreuzung gleichrangiger Straßen und eine entsprechende Anzahl von Fahrzeugen und
- Fig. 2: schematisch ein Zeit-Geschwindigkeits-Diagramm.

Einander entsprechende Teile sind in allen Figuren mit den gleichen Bezugszeichen versehen.

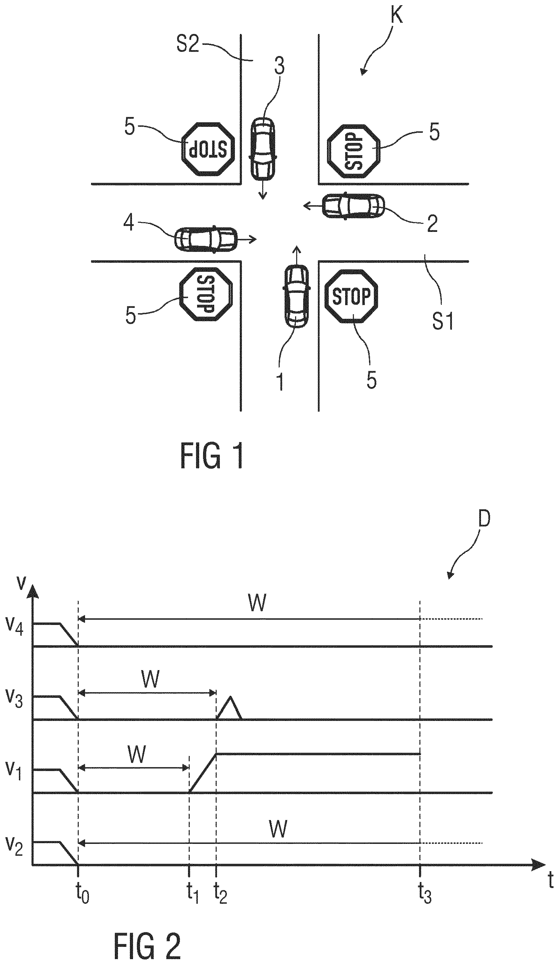

Figur 1 zeigt eine Kreuzung K, an welcher sich zwei gleichrangige Straßen S1, S2 kreuzen, wobei auf jedem in die Kreuzung K mündenden Straßenabschnitt ein Fahrzeug 1 bis 4 steht.

Alle in Figur 1 gezeigten Fahrzeuge 1 bis 4 werden im automatisierten Fahrbetrieb bewegt, wobei sich unter Umständen kein Insasse im Fahrzeug 1 bis 4 befindet.

Werden alle Fahrzeuge 1 bis 4 im manuellen Fahrbetrieb bewegt, ergibt sich einer solchen in Figur 1 gezeigten Verkehrssituation die Notwendigkeit, dass die Fahrzeugnutzer miteinander kommunizieren, um festzulegen, welches der Fahrzeuge 1 bis 4 die Kreuzung K als erstes passiert.

Gemäß dem vorliegenden Ausführungsbeispiel fahren alle Fahrzeuge 1 bis 4 im automatisierten Fahrbetrieb, wobei sich gegebenenfalls kein Insasse in dem jeweiligen Fahrzeug 1 bis 4 befindet, welcher mit einem Insassen eines der Fahrzeuge 1 bis 4 kommunizieren kann.

An allen in die Kreuzung K mündenden Straßenabschnitten in Figur 1 steht, insbesondere wie in den USA üblich, jeweils ein Stoppschild 5, so dass alle Fahrzeuge 1 bis 4 anhalten müssen. Eine Vorfahrtsregelung erfolgt dann dahingehend, dass das Fahrzeug 1 bis 4, welches zuerst angehalten hat, als Erstes die Kreuzung K passieren kann. Halten mehrere Fahrzeuge 1 bis 4 gleichzeitig an der Kreuzung K, so gilt eine Rechts-vor-links-Regelung und/oder es ist erforderlich, dass sich die Fahrzeugnutzer abstimmen.

Im Folgenden wird ein Verfahren beschrieben, welches in einer solchen Verkehrssituation an einer Kreuzung K mit zwei gleichrangigen Straßen S1, S2 und vier automatisiert fahrenden Fahrzeugen 1 bis 4 eine Lösung darstellt.

In Figur 2 ist ein Zeit-Geschwindigkeits-Diagramm D dargestellt, in welchem vier Geschwindigkeitsverläufe v₁ bis v₄ in Bezug auf die Zeit t abgebildet sind, die dem jeweiligen an der Kreuzung K stehenden Fahrzeug 1 bis 4 zugeordnet sind.

Zu einem Zeitpunkt t₀ erreichen alle Fahrzeuge 1 bis 4 die Kreuzung K und erkennen den Konflikt, wer die Kreuzung K als Erstes passieren kann. Zu diesem Zeitpunkt t₀ stehen alle Fahrzeuge 1 bis 4 an einer Haltlinie, warten und starten jeweils einen Zeitzähler mit einer zufälligen oder pseudozufälligen Ablaufzeit, insbesondere Wartezeit W.

In dem vorliegenden Ausführungsbeispiel ist die Wartezeit W eines Fahrzeuges 1 zu einem ersten Zeitpunkt t₁ zuerst abgelaufen, woraufhin sich das Fahrzeug 1 ein Kurvendurchfahrtmanöver startet, bei dem es sich zunächst in die Kreuzung K hineintastet. Ein erstes weiteres Fahrzeug 2 und ein zweites weiteres Fahrzeug 3 erkennen diese Hineintastbewegung des Fahrzeuges 1 und warten weiterhin. Eine zufällige Wartezeit eines dritten weiteren Fahrzeuges 4 ist zu einem zweiten Zeitpunkt t₂ abgelaufen.

Im Fall, dass das dritte weitere Fahrzeug 4 das Hineintasten des Fahrzeuges 1 erkennt, wird eine Hineintastbewegung des dritten weiteren Fahrzeuges 4, welches sich nach dem Ablauf seiner zufälligen oder pseudozufälligen Wartezeit W in die Kreuzung K hineintastet, abgebrochen.

Im Fall, dass das Fahrzeug 1 und das zweite weitere Fahrzeug 3 jeweils die Hineintastbewegung des jeweils anderen erkennen, brechen das Fahrzeug 1 und das zweite weitere Fahrzeug 3 ihre Hineintastbewegung ab und das Verfahren beginnt erneut, wie zum Zeitpunkt t₀.

Gemäß dem Ausführungsbeispiel in Figur 2 passiert und verlässt das Fahrzeug 1 zu einem dritten Zeitpunkt t₃ die Kreuzung.

Löst sich die nun vorherrschende Verkehrssituation mit den weiteren Fahrzeugen 2 bis 4 nicht aufgrund lokal geltender Verkehrsregeln auf, beginnt die Arbitrierung erneut mit den verbleibenden drei weiteren Fahrzeugen 2 bis 4.

Insbesondere werden bzw. wird die jeweilige Hineintastbewegung und/oder ein weiteres Verhalten der Fahrzeuge 1 bis 4 anhand erfasster Signale und/oder erfasster Bildsignale von Erfassungseinheiten einer Umgebungssensorik des jeweiligen Fahrzeuges 1 bis 4 erfasst.

Bei dem vorliegenden Verfahren erfolgt eine Arbitrierung gemäß einer vorgegebenen Arbitrierungsregel, bei der durch Auswertung eindeutiger Merkmale der Fahrzeuge, beispielsweise durch Auswertung derer Fahrzeugkennzeichen, bestimmt wird, welches der Fahrzeuge 1 bis 4 gegenüber den anderen Fahrzeugen 1 bis 4 Vorrang beim Durchfahren der Kurve K haben soll. Das Fahrzeug 1 startet sein Kurvendurchfahrtmanöver nach Ablauf der Wartezeit erst dann, wenn gemäß der Arbitrierungsregel bestimmt wurde, dass es gegenüber den weiteren Fahrzeugen 2 bis 4 Vorrang haben soll.

Insbesondere basiert diese Möglichkeit der Arbitrierung auf einer herstellerübergreifend vereinbarten gemeinsamen Arbitrierungsregel. Sämtliche Fahrzeuge 1 bis 4 wenden dann die gleiche Arbitrierungsregel zur Bestimmung des Vorrangs an.

Beispielsweise sieht die Arbitrierungsregel vor, dass den Fahrzeugkennzeichen der Fahrzeuge 1 bis 4 jeweils eine Zeichenfolge, beispielsweise ein Zahlenwert, zugeordnet wird und dass der Vorrang entsprechend einer vorgenommenen Sortierung dieser Zeichenfolge bestimmt wird. Insbesondere wird die dem jeweiligen Fahrzeugkennzeichen zugeordnete Zeichenfolge mittels einer Hashfunktion, z. B. Message-Digest 5, aus den Zeichen des jeweiligen Fahrzeugkennzeichens ermittelt. Die mittels der Hashfunktion ermittelte Hashwerte werden miteinander verglichen, wobei beispielsweise das Fahrzeug mit dem Fahrzeugkennzeichen identifiziert wird, dem der kleinste Hashwert zugeordnet wird, und wobei bestimmt wird, dass dieses Fahrzeug Vorrang gegenüber den anderen Fahrzeugen haben soll.

Insbesondere werden die Fahrzeugkennzeichen der Fahrzeuge 1 bis 4 anhand erfasster Bilddaten einer Fahrzeugkamera einer Umgebungssensorik des jeweiligen Fahrzeuges 1 bis 4 erfasst, wobei das eigene Fahrzeugkennzeichen und/oder dessen Hashwert fahrzeugseitig hinterlegt sind bzw. ist.

Alternativ zur Hashfunktion kann die Zuordnung eines Zahlenwerts zu einem Fahrzeugkennzeichen auch dadurch erfolgen, dass den sich auf dem Fahrzeugkennzeichen befindenden Ziffern und/oder Buchstaben jeweils ein Wert zugeordnet wird und die Summe der Werte je Fahrzeugkennzeichen ermittelt wird.

## Patentansprüche

1. Verfahren zur Steuerung eines automatisiert fahrenden Fahrzeuges (1) bei einem Einfahren in eine Kreuzung (K) gleichrangiger Straßen, wobei das das Fahrzeug (1) beim Erkennen von gleichberechtigten weiteren Fahrzeugen (2 bis 4) an der Kreuzung (K) den weiteren Fahrzeugen (2 bis 4) zumindest für eine vorgebbare Wartezeit (W) Vorfahrt gewährt,
**dadurch gekennzeichnet,**
**dass** das Fahrzeug (1)
- gemäß einer vorgegebenen Arbitrierungsregel bestimmt, ob es gegenüber den weiteren Fahrzeugen (2 bis 4) einen Vorrang zum Passieren der Kreuzung (K) haben soll, und
- nach Ablauf der Wartezeit (W) ein Kreuzungsdurchfahrtmanöver zum Durchfahren der Kreuzung (K) startet, falls bestimmt wurde, dass es den Vorrang zum Passieren der Kreuzung (K) haben soll und falls in der Zwischenzeit keines der weiteren Fahrzeuge (2 bis 4) losgefahren ist.

2. Verfahren nach Anspruch 1,
**dadurch gekennzeichnet,**
**dass** das Fahrzeug sich beim Starten des Kreuzungsdurchfahrtmanöver langsam in die Kreuzung (K) hineintastet.

3. Verfahren nach Anspruch 1 oder 2,
**dadurch gekennzeichnet,**
**dass** das Fahrzeug das Kreuzungsdurchfahrtmanöver solange fortsetzt, solange die weiteren Fahrzeuge (2 bis 4) weiterhin warten.

4. Verfahren nach einem der vorherigen Ansprüche,
**dadurch gekennzeichnet,**
**dass** das Fahrzeugs (1) das Kreuzungsdurchfahrtmanöver unterbricht und anhält, wenn zumindest eines der weiteren Fahrzeuge (2 bis 4) nicht mehr wartet.

5. Verfahren nach Anspruch 4,
**dadurch gekennzeichnet,**
**dass** das das Fahrzeug (1) das Kreuzungsdurchfahrtmanöver nach einer weiteren Wartezeit (W) ab der Unterbrechung erneut startet, wenn die die weiteren Fahrzeuge (2 bis 4) wieder warten.

6. Verfahren nach einem der vorherigen Ansprüche,
**dadurch gekennzeichnet, dass**
die Wartezeit (W) und/oder die weitere Wartezeit (W) zufällig oder pseudozufällig vorgegeben werden bzw. wird.

7. Verfahren nach einem der vorherigen Ansprüche,
**dadurch gekennzeichnet, dass**
die Arbitrierungsregel vorsieht, dass der Vorrang zum Passieren der Kreuzung (K) anhand von Fahrzeugkennzeichen des Fahrzeuges (1) und der weiteren Fahrzeuge (2 bis 4) bestimmt wird.

8. Verfahren nach Anspruch 7,
**dadurch gekennzeichnet,**
**dass** mittels einer Hashfunktion aus den Fahrzeugkennzeichen jeweils ein Hashwert ermittelt wird und dass der Vorrang entsprechend einer Sortierreihenfolge der Hashwerte bestimmt wird.

9. Verfahren nach Anspruch 7,
**dadurch gekennzeichnet, dass**
auf einem Fahrzeugkennzeichen befindlichen Ziffern und/oder Buchstaben jeweils ein Wert zugeordnet wird, wobei eine Summe der Werte je Fahrzeugkennzeichen ermittelt wird und den Fahrzeugen (1 bis 4) in einer Reihenfolge von der kleinsten Summe zu der größten Summe nacheinander Vorrang zum Passieren der Kreuzung (K) zugeordnet wird.

10. Verfahren nach einem der Ansprüche 7 bis 9,
**dadurch gekennzeichnet, dass**
die Fahrzeugkennzeichen der weiteren Fahrzeuge (2 bis 4) anhand erfasster Bildsignale einer Fahrzeugkamera einer Umgebungssensorik des Fahrzeuges (1) ermittelt werden, wobei das Fahrzeugkennzeichen des Fahrzeuges (1) in einer fahrzeugseitigen Speichereinheit hinterlegt ist.

## Claims

1. Method for controlling a self-driving vehicle (1) when entering an intersection (K) of equal-ranking roads, wherein, when other vehicles (2 to 4) of equal priority are identified at the intersection (K), the vehicle (1) gives way to the other vehicles (2 to 4) at least for a predefinable waiting time (W),
**characterized in that**
the vehicle (1)
- determines, according to a predefined arbitration rule, whether it should have priority over the other vehicles (2 to 4) to pass through the intersection (K), and
- after the waiting time (W) has elapsed, starts an intersection drive-through maneuver to drive through the intersection (K) if it has been determined that it should have priority to pass through the intersection (K) and if none of the other vehicles (2 to 4) have moved off in the meantime.

2. Method according to claim 1,
**characterized in that**
when starting the intersection drive-through maneuver, the vehicle makes its way into the intersection (K) slowly.

3. Method according to either claim 1 or claim 2,
**characterized in that**
the vehicle continues the intersection drive-through maneuver as long as the other vehicles (2 to 4) continue to wait.

4. Method according to any of the preceding claims,
**characterized in that**
the vehicle (1) interrupts the intersection drive-through manoeuvre and stops when at least one of the other vehicles (2 to 4) is no longer waiting.

5. Method according to claim 4,
**characterized in that**
the vehicle (1) restarts the intersection drive-through maneuver after a further waiting time (W) from the interruption when the other vehicles (2 to 4) are waiting again.

6. Method according to any of the preceding claims,
**characterized in that**
the waiting time (W) and/or the further waiting time (W) are or is predefined randomly or pseudorandomly.

7. Method according to any of the preceding claims,
**characterized in that**
the arbitration rule provides that the priority for passing through the intersection (K) is determined on the basis of vehicle registration numbers of the vehicle (1) and of the other vehicles (2 to 4).

8. Method according to claim 7,
**characterized in that**
a hash value is ascertained from each of the vehicle registration numbers using a hash function and **in that** the priority is determined according to a sorting order of the hash values.

9. Method according to claim 7,
**characterized in that**
a value is assigned to each of the numbers and/or letters on a vehicle registration number, wherein a sum of the values is ascertained for each vehicle registration number and the vehicles (1 to 4) are assigned priority for passing through the intersection (K) one after the other in an order from the smallest sum to the largest sum.

10. Method according to any of claims 7 to 9,
**characterized in that**
the vehicle registration numbers of the other vehicles (2 to 4) are ascertained on the basis of captured image signals from a vehicle camera of an environmental sensor system of the vehicle (1), wherein the vehicle registration number of the vehicle (1) is stored in a memory unit in the vehicle.

## Revendications

1. Procédé pour la commande d'un véhicule (1) circulant en mode automatisé lors d'une entrée dans un carrefour (K) de routes de même niveau, le véhicule (1), lors de la détection d'autres véhicules (2 à 4) ayant les mêmes droits au carrefour (K), accordant la priorité aux autres véhicules (2 à 4) au moins pendant un temps d'attente (W) pouvant être prédéfini,
**caractérisé en ce que**
le véhicule (1)
- détermine, conformément à une règle d'arbitrage prédéterminée, s'il doit avoir la priorité sur les autres véhicules (2 à 4) pour la traversée du carrefour (K), et
- après l'écoulement du temps d'attente (W), lance une manoeuvre de franchissement de carrefour pour le franchissement du carrefour (K) s'il a été déterminé qu'il doit avoir la priorité pour la traversée du carrefour (K) et si, entre-temps, aucun des autres véhicules (2 à 4) n'est parti.

2. Procédé selon la revendication 1,
**caractérisé en ce que**
le véhicule s'engage lentement dans le carrefour (K) lors du démarrage de la manoeuvre de franchissement de carrefour.

3. Procédé selon la revendication 1 ou 2,
**caractérisé en ce que**
le véhicule poursuit la manoeuvre de franchissement de carrefour tant que les autres véhicules (2 à 4) continuent d'attendre.

4. Procédé selon l'une des revendications précédentes,
**caractérisé en ce que**
le véhicule (1) interrompe la manoeuvre franchissement de carrefour et s'arrête lorsqu'au moins un des autres véhicules (2 à 4) n'attend plus.

5. Procédé selon la revendication 4,
**caractérisé en ce que**
le véhicule (1) recommence la manoeuvre de franchissement de carrefour après un temps d'attente (W) supplémentaire à partir de l'interruption, lorsque les autres véhicules (2 à 4) attendent à nouveau.

6. Procédé selon l'une des revendications précédentes,
**caractérisée en ce que**
le temps d'attente (W) et/ou le temps d'attente (W) supplémentaire sont ou seront prédéfinis de manière aléatoire ou pseudo-aléatoire.

7. Procédé selon l'une des revendications précédentes,
**caractérisée en ce que**
la règle d'arbitrage prévoit que la priorité pour la traversée du carrefour (K) est déterminée sur la base des numéros d'immatriculation des véhicules du véhicule (1) et des autres véhicules (2 à 4).

8. Procédé selon la revendication 7,
**caractérisé en ce que,**
à l'aide d'une fonction de hachage, une valeur de hachage est respectivement établie à partir des numéros d'immatriculation des véhicules **et en ce que** la priorité est déterminée conformément à un ordre de tri des valeurs de hachage.

9. Procédé selon la revendication 7,
**caractérisée en ce**
**qu'**une valeur est attribuée à chaque chiffre et/ou lettre se trouvant sur un numéro d'immatriculation de véhicule, une somme des valeurs étant établie pour chaque numéro d'immatriculation de véhicule et la priorité étant attribuée successivement aux véhicules (1 à 4) dans un ordre allant de la plus petite somme à la plus grande somme pour la traversée du carrefour (K).

10. Procédé selon l'une des revendications 7 à 9,
**caractérisée en ce que**
les numéros d'immatriculation des autres véhicules (2 à 4) sont établis à l'aide de signaux d'image détectés d'une caméra de véhicule d'un système de capteurs d'environnement du véhicule (1), le numéro d'immatriculation du véhicule (1) étant enregistré dans une unité de mémoire côté véhicule.
